# EUROPEAN PATENT SPECIFICATION

(11) **EP 1 456 757 B1**
(45) Date of publication and mention of the grant of the patent: **04.08.2010**
(21) Application number: 01986244.0
(22) Date of filing: 20.12.2001
(51) Int. Cl.: G06F 12/06

(54) **PENALTY FREE ADDRESS DECODING SCHEME**
ADRESSENDECODIERUNGSSCHEMA OHNE KOSTENFAKTOR
SCHEMA DE DECODAGE D'ADRESSE SANS PENALITE

(43) Date of publication of application: 15.09.2004
(73) Proprietor: TELEFONAKTIEBOLAGET LM ERICSSON (publ), 164 83 Stockholm (SE)
(72) Inventor: PLESNER, Erik, DK-7860 Spoettrup (DK)
(74) Representative: Sjöberg, Mats Hakan
(86) International application number: PCT/SE2001/002862
(87) International publication number: WO 2002/028162

(56) References cited:
- US-A- 5 913 219
- US-B1- 6 308 244

## Description

### TECHNICAL FIELD OF THE INVENTION

The present invention relates to arrangements and methods for change-over between memory planes when updating a program memory.

### DESCRIPTION OF RELATED ART

When designing products which contain a microcontroller, software SW for this microprocessor has traditionally been contained in either on-chip ROM or off-chip (i.e. separate) erasable EPROM. Recent years, Flash FPROMs has been used to store the SW because FPROMs can be reprogrammed to update the SW in the product. The product can be designed in such a way that it can reprogram itself e.g. via a serial cable, Internet connection or similar. The problem with this self-programming is that the microcontroller can not execute SW located in the FPROM, while the FPROM is being reprogrammed.

This problem can be addressed by copying the update algorithm to RAM and executing it from the RAM, keeping the update algorithm in on-chip ROM or off-chip ROM/EPROM or by using two different FPROMs. In this way the microcontroller can execute code from one FPROM, while updating the contents of the other FPROM.

The later solution also has the advantage that two versions of the application software can be kept at the same time, and if problems arise with the new version, the product can automatically revert to the previous version, and do a new update. In many products the space is limited (e.g. mobile phones) and therefore two FPROM chips are inconvenient. The FPROM chip vendors have addressed the problem by launching the "dual-plane" architecture, which is two independent FPROM chips on the same die. This dual architecture allows one part of the FPROM to be used for program execution while the other part is being erased or reprogrammed.

The two "planes" share all control, data and addresses pins, and are usually mapped into separate address spaces of the chip. This address distribution implies that the SW has to be compiled/linked to a specific FPROM plane. If a particular version of the SW has been linked for a first address space, it will not be able to work correct in a second address space, and vice versa. This restriction is in general not acceptable, and therefore auxiliary hardware is needed to swap the address-spaces of the two FPROM planes, such that the "active", i.e. currently used, plane always is mapped into one address space and the passive FPROM plane into the other. It is known to use a general purpose I/O pin in conjunction with an XOR gate to toggle the value of the most significant address pin of the FPROM. This address bit of the FPROM distinguishes the two planes of the dual-plane FPROM. Therefore the I/O pin can make either one of the two planes to "switch places" in the memory map of the microcontroller. In the US patent US 6,192,421 is disclosed a program-controlled device with reloading possibility for and change-over possibility to a second operating system without program interruption, where a switchable change-over switch is provided in the address lines. In the US patent however, the switchable change-over switch provided in the address lines causes an additional delay, which causes general performance degradation. In the US patent US 5,913,219 is disclosed a database recovery apparatus and method of using dual plane non-volatile memory, including a volatile memory and a non-volatile memory, so that high speed transaction processing and recovery can be performed.

If the microcontroller has a programmable chip-select generator, the problem of swapping the FPROM planes can be solved in the following way: Two separate chip-select lines are programmed to activate on one FPROM plane each. The two chip-select lines are OR'ed together to form the resulting chip select signal for the FPROM, while one of the chip-select signals also are connected to the most significant address line of the FPROM. The problem with this solution is that the resulting chip select signal of the FPROM usually is on the critical path, and the delay inferred on this signal by the OR-gate causes general performance degradation.

### SUMMARY OF THE INVENTION

The present invention relates to a problem how to change-over between memory planes without performance degradation caused by delay on time critical paths between a microcontroller controlling the memory, and the memory.

A purpose with the invention is to accomplish execution of program code in the memory, while the memory is reprogrammed.

The problem is solved by the invention by a microcontroller comprising a chip-select generator, which is used in a way that no time-critical elements need to influence time-critical paths between the microcontroller and the controlled memory.

More in detail, the problem is solved by an arrangement for addressing the memory, which memory is a dual-plane memory having a first signal input used to activate the memory and a second signal input used to address one of the two memory planes. The arrangement comprises a microprocessor having a built-in configurable chip-select generator with a first chip-select output and a second chip-select output. The first output is connected to the first input of the memory and the second output is connected to the second input of the memory. The outputs and the inputs are connected to each other without time critical element in-between.

One advantage with the invention is the possibility to download a new version of software to a product, without performance has to be compromised.

Another advantage with the invention is that software can be compiled/linked in the same way, no matter if it is downloaded to a first or second plane in the memory, and without performance has to be compromised.

Yet another advantage with the invention is that it accomplish high performance, without increasing the component cost.

The invention will now be described more in detail with the aid of preferred embodiments in connection with the enclosed drawings.

### BRIEF DESCRIPTION OF THE DRAWINGS

Figure 1 shows a block schematic illustration of a memory configuration according to the invention, comprising a microprocessor controlling a dual-plane memory.
Figure 2 shows a memory map comprising two planes of the dual-plane memory, each of which plane is either active or inactive.
Figure 3 shows a flow chart illustrating a method used to program the microprocessor in accordance with the invention when the polarity of CS1 is changeable.
Figure 4a and 4b show flow chars illustrating methods used to program the microprocessor in accordance with the invention when the polarity of CS1 is fixed.

### DETAILED DESCRIPTION OF EMBODIMENTS

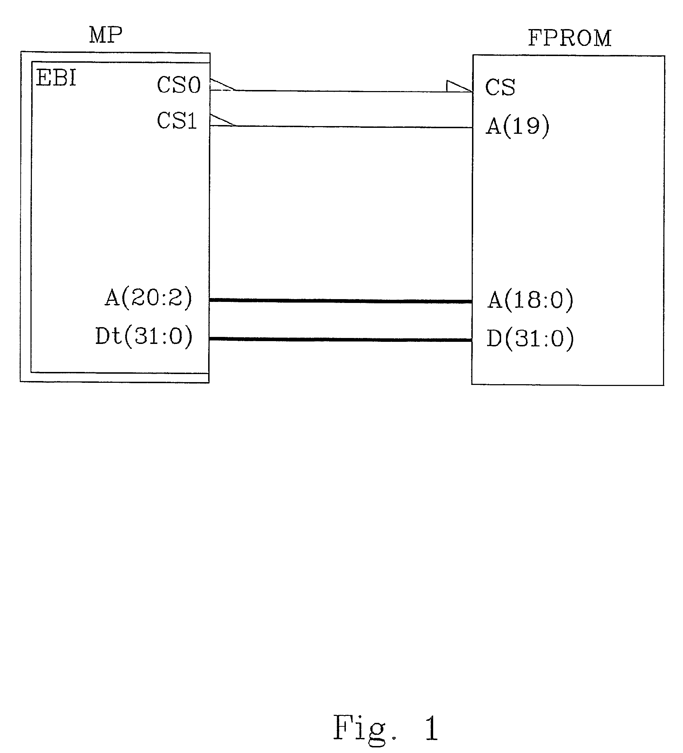

Figure 1 discloses a memory configuration according to the invention. The figure shows a microprocessor MP connected to a dual-plane Flash Programmable Read Only Memory FPROM. The FPROM can be programmed or re-programmed after the chip has been soldered onto a chip-board. The FPROM comprises a first signal input CS used to activate the memory and a second signal input A19, which is an address input, used to address either one of two planes of the dual-plane memory. In this example, activation of the address input A(19) represents activation of the nineteenth address bit. The FPROM comprises data access lines D(31:0) and address input lines A(18:0). The build up of the FPROM will be further clarified when the next figure in the patent application is explained. The microprocessor comprises an external bus interface EBI. The bus interface generates signals that control the access to the FPROM. The bus interface EBI comprises a first chip-select output CS0 and a second chip-select output CS1. The first output CS0 of the microprocessor is connected to the first input CS of the FPROM. The second output CS1 of the microprocessor is connected to the second input A19 of the FPROM. The external bus interface EBI is configurable and can be programmed to activate the outputs CS0 and CS1 under predetermined conditions. The microprocessor in figure 1 comprises nineteen address output lines A(20:2) and thirty-two data access lines Dt(31:0). The address output lines A(20:2) of the microprocessor are connected to the address input lines A(18:0) of the FPROM. The data access lines Dt(31:0) of the microprocessor are connected to the data access lines D(31:0) of the FPROM.

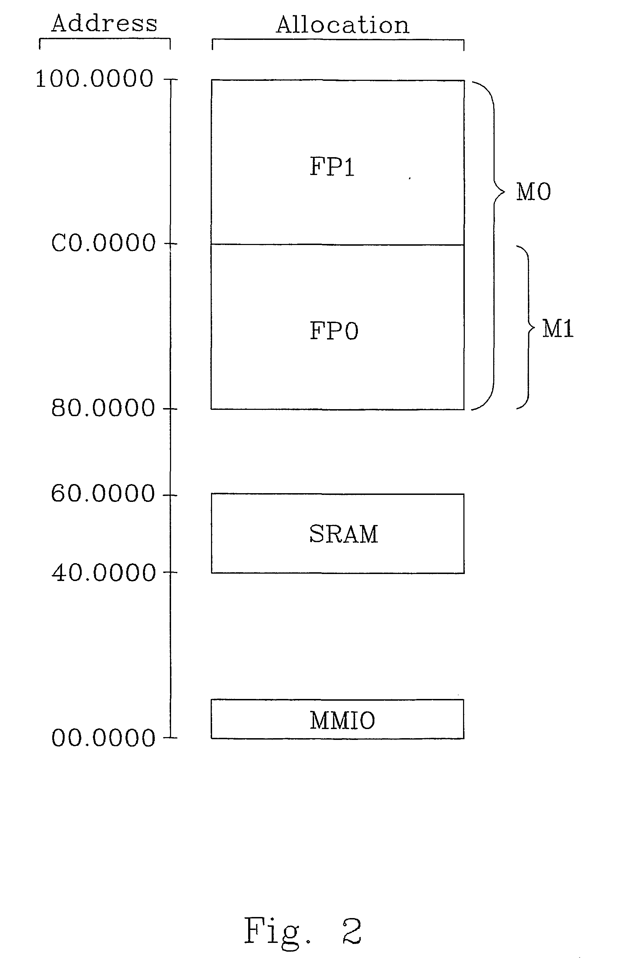

Figure 2 shows, as an example, a memory map used in the configuration shown above. The figure shows hexadecimal notation of addresses and from now on all addresses will be referred to in the patent description by hexadecimal notation. The full content of the memory map extends from address 00.0000 to address 100.0000. It is to be noted that the memory map shown in figure 2 is the memory map that is seen by the microprocessor MP. A static random access memory SRAM is located between address 40.0000 and 60.0000 of the memory map. The random access memory function as a working memory for the microprocessor MP. The memory map I/O MMIO starting from address 00.0000 is used to store input/output interface parameters used by the microprocessor. The FPROM that was shown in figure 1 is a so-called dual-plane FPROM that is two independent FPROM chips on the same die. This architecture allows one part of the FPROM to be used for program execution while the other part is being erased or reprogrammed. The two planes share all control, data and addresses pins, and are usually mapped into separate address spaces of the chip. E.g. a dual-plane chip of 4Mbit + 4Mbit FPROM looks like an 8Mbit FPROM chip to the external world. The two planes are mapped into the lower and upper halves of the address space, respectively. The FPROM can also have uneven splits, e.g. 2Mbit + 6Mbit. The location of the two planes in the memory map in this example is disclosed in figure 2. A first plane FP0 is located from address 80.0000 to BF.FFFF. A second plane FP1 is located from address C0.0000 and FF.FFFF.

The above shown address distribution of the FPROM implies that the software has to be compiled/linked to a specific FPROM plane. If a particular version of the software has been linked for the FP1 plane, it will not be able to work correct in the FP0 plane, and vice versa. This restriction is in general not acceptable, and therefore the address-spaces need to be swapped, such that the currently used plane, the so-called active plane, always is mapped into one address space (e.g. 80.0000-BF.FFFF). The currently not used plane, the so-called passive FPROM plane, is in the same way mapped into the other address space (e.g. C0.0000-FF.FFFF).

To always access the "correct" plane, the invention makes use of the external bus interface EBI located in the microprocessor MP. The external bus interface comprises in this example a built-in programmable chip-select generator. The chip-select generator has the ability to assert more than one output at the same time. This ability is present on some off-the-shelf micro-controllers, e.g. ATMEL AT91M40800. According to the invention, the chip-select generator is configured to always activate the first chip-select output CS0 whenever the FPROM is to be accessed. Assuming now that FP0 is the plane currently used, i.e. the active plane. Beyond CS0, also CS1 is activated (active "low"). The address range 80.0000 to BF.FFFF is now accessed. If on the other hand FP1 instead is defined to be the plane currently used, i.e. FP1 is the active plane, the chip-select generator is re-programmed to change the polarity of CS1. CS1 now becomes inactive (or active "high") when the FPROM is to be accessed. In this case the address areas C0.0000 to FF.FFFF will be accessed. In the figure can be seen how the chip-select signals CS0 and CS1 are used to access the planes. When CS0 is activated the memory area M0 is activated. If also CS1 is activated the area M1 is activated and FP0 is selected. If CS1 instead is inactivated, FP1 is selected.

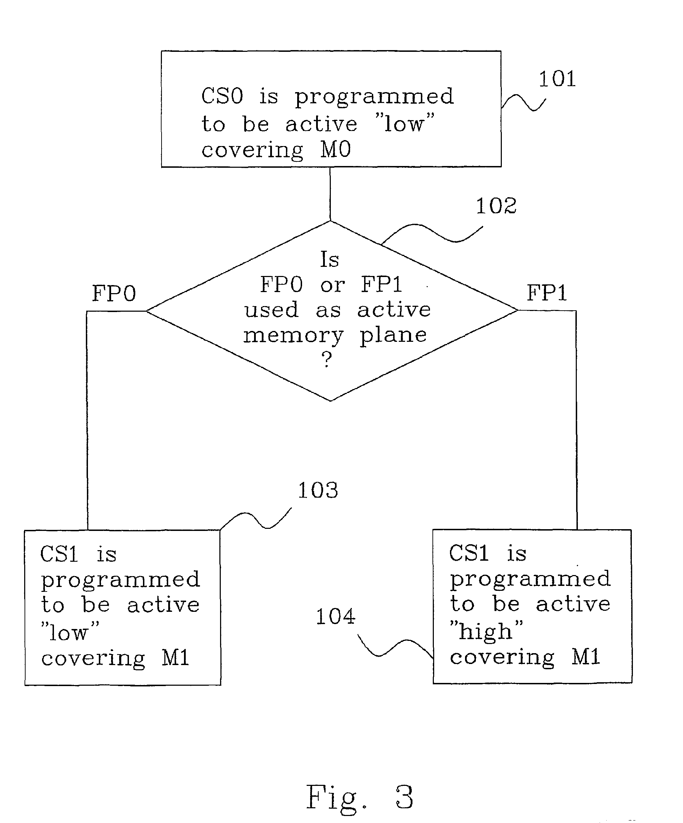

In figure 3 is disclosed a flow chart showing some of the steps used when the chip-select generator is programmed in accordance with the invention and when it is possible to program the generator to change the polarity of CS1. The flow chart is to be read together with the earlier shown figures. The steps are as follows:
- CS0 is programmed to be active "low" covering M0 when accessing the memory. This step is shown in the figure by a block 101.
- After definition of which memory plane FP0 or FP1 that is the active plane, the programming of CS1 starts. This step is shown in the figure by a block 102.
- If FP0 is defined as the active plane, CS1 is programmed to be active "low" covering M1. This step is shown in the figure by a block 103.
- If on the other hand FP1 is defined as the active plane, CS1 is programmed to be active "high" covering M1. This step is shown in the figure by a block 104.

The way to program the chip-select generator of course contains a manifold of different variations depending on which type of chip select generator that is used. In the micro-controller ATMEL AT91M40800 for example, the chip-select output CS1 referred to above is fixed to be either active "high" or active "low". If the chip-select generator is not able to reprogram the polarity of its outputs, CS1 can be reprogrammed to react on the address range instead. If for example CS1 is fixed active "low" it is possible to change polarity by changing the address area in which CS1 is active. Changing base address for desired plane can do this. A description of this can be found in the description of the microcontroller AT91M40400, Rev. 0768B-09/98. The address range which the chip-select outputs respond to can usually be programmed by writing to a single register. In this way the WRITE operation is atomic and this property solves all problems with consistency of the chip-select logic.

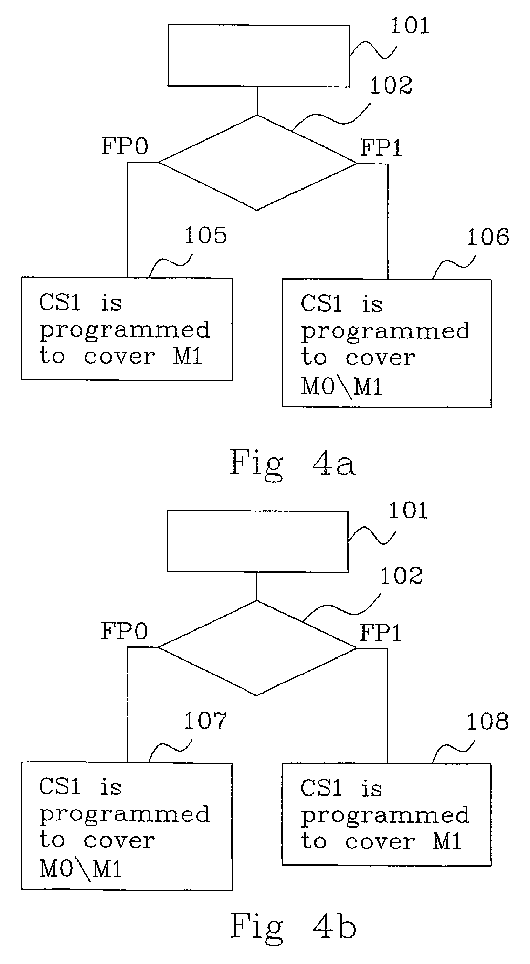

In figure 4 is disclosed a flow chart showing some of the steps used when the polarity of CS1 is fixed. The first two blocks 101&102 of figure 4a and 4b are the same as the blocks 101&102 already shown in figure 3. The flow chart is to be read together with also the earlier shown figures. The steps in figure 4a where CS1 is fixed active "low" are as follows:
- If FP0 is defined as the active plane and CS1 is fixed active "low", CS1 is programmed to cover M1 by programming the address range 80.0000-BF.FFFF which the chip-select outputs respond to. This step is shown in the figure by a block 105.
- If on the other hand FP1 is defined as the active plane and CS1 is fixed active "low", CS1 is programmed to cover M0\M1 i.e. the part of M0 which is not covered by M1, by programming the address range C0.0000-BF.FFFF which the chip-select outputs respond to. This step is shown in the figure by a block 106.

The steps in the flow chart in figure 4b where CS1 is fixed active "high" are as follows:
- If FP0 is defined as the active plane and CS1 is fixed active "high", CS1 is programmed to cover M0\M1 by programming the address range C0.0000-BF.FFFF which the chip-select outputs respond to. This step is shown in the figure by a block 107.
- If on the other hand FP1 is defined as the active plane and CS1 is fixed active "high", CS1 is programmed to cover M1 by programming the address range 80.0000-BF.FFFF which the chip-select outputs respond to. This step is shown in the figure by a block 108.

Different variations are of course possible within the scope of the invention. The invention can for example be implemented by ASIC-design, ASIC: Application Specific Integrated Circuits. The chip-select generator can be externally located outside the microprocessor. The technique to program the configurable chip-select generator varies depending on which type of chip select generator that is used. The invention is of course not limited to the above described and in the drawings shown embodiments but can be modified within the scope of the enclosed claims.

## Claims

1. Arrangement for addressing a dual-plane memory (FPROM), which memory has a first signal input (CS) used to activate the memory and a second signal input (A19) used to address one of two memory planes (FPO; FP1), which arrangement comprises a microprocessor (MP) ***characterized in* that** the microprocessor comprises a chip-select generator (EBI) having a first chip-select output (CS0) and a second chip-select output (CS1), whereby the first chip-select output (CS0) is connected to the first signal input (CS) and the second chip-select output (CS1) is connected to the second signal input (A19), and that the chip-select outputs (CS0, CS1) and the signal inputs (CS, A19) are connected to each other without time critical element in-between.

2. Arrangement for addressing a memory according to claim 1, whereby the chip-select generator (EBI) is built-into the microprocessor (MP).

3. Arrangement for addressing a memory according to claim 1 or 2, whereby the chip-select generator (EBI) is configurable.

4. Arrangement for addressing a memory according to any of claim 1-3, whereby the second chip-select output (CS1) is arranged to address either one of the two memory planes (FPO; FP1), depending on which of the two memory planes (FPO; FP1) is defined as active plane.

5. Arrangement for addressing a memory according to any of claim 1-4, whereby the second chip-select output (CS1) is active "low" when a first plane (FP0) of the two memory planes is defined as active plane and whereby the second chip-select output (CS1) is active "high" when a second plane (FP1) of the two memory planes is defined as active plane.

6. Arrangement for addressing a memory according to any of claim 1-5, whereby the second chip-select output (CS1) is programmed to react on a specified address range (80.0000-BF.FFFF; C0.0000-FF.FFFF).

7. Arrangement for addressing a memory according to any of claim 1-6, whereby the first chip-select output (CS0) is active "low" when the memory is accessed.

## Patentansprüche

1. Anordnung zum Adressieren eines Doppelebenenspeichers (FPROM), wobei der Speicher einen ersten Signaleingang (CS) aufweist, der genutzt wird, um den Speicher zu aktivieren, und einen zweiten Signaleingang (A19), der genutzt wird, um eine von zwei Speicherebenen (FP0; FP1) zu adressieren, wobei die Anordnung einen Mikroprozessor (MP) umfasst, **dadurch gekennzeichnet, dass** der Mikroprozessor einen Chipauswahlgenerator (EBI) mit einem ersten Chipauswahlausgang (CS0) und einem zweiten Chipauswahlausgang (CS1) umfasst, wobei der erste Chipauswahlausgang (CS0) mit dem ersten Signaleingang (CS) verbunden ist und der zweite Chipauswahlausgang (CS1) mit dem zweiten Signaleingang (A19) verbunden ist, und **dadurch**, dass die Chipauswahlausgänge (CS0, CS1) und die Signaleingänge (CS, A19) ohne zeitkritische Elemente dazwischen miteinander verbunden sind.

2. Anordnung zum Adressieren eines Speichers nach Anspruch 1, wobei der Chipauswahlgenerator (EBI) in den Mikroprozessor (MP) eingebaut ist.

3. Anordnung zum Adressieren eines Speichers nach Anspruch 1 oder 2, wobei der Chipauswahlgenerator (EBI) konfigurierbar ist.

4. Anordnung zum Adressieren eines Speichers nach einem der Ansprüche 1 - 3, wobei der zweite Chipauswahlausgang (CS1) angeordnet ist, um einen der zwei Speicherebenen (FP0; FP1) in Abhängigkeit davon, welcher der beiden Speicherebenen (FP0; FP1) als aktive Ebene definiert ist, zu adressieren.

5. Anordnung zum Adressieren eines Speichers nach einem der Ansprüche 1 - 4, wobei der zweite Chipauswahlausgang (CS1) aktiv "niedrig" ist, wenn eine erste Ebene (FP0) der zwei Speicherebenen als aktive Ebene definiert ist, und wobei der zweite Chipauswahlausgang (CS1) aktiv "hoch" ist, wenn eine zweite Ebene (FP1) der zwei Speicherebenen als aktive Ebene definiert ist.

6. Anordnung zum Adressieren eines Speichers nach einem der Ansprüche 1 - 5, wobei der zweite Chipauswahlausgang (CS1) programmiert ist, um auf einen spezifizierten Adressbereich (800000 - BF.FFFF; C0.0000 - FF.FFFF) zu reagieren.

7. Anordnung zum Adressieren eines Speichers nach einem der Ansprüche 1 - 6, wobei der erste Chipauswahlausgang (CS0) aktiv "niedrig" ist, wenn auf den Speicher zugegriffen wird.

## Revendications

1. Agencement pour adresser une mémoire à plan double (FPROM), laquelle mémoire a une première entrée de signal (CS) utilisée pour activer la mémoire et une deuxième entrée de signal (A19) utilisée pour adresser l'un des deux plans de mémoire (FP0 ; FP1), lequel agencement comprend un microprocesseur (MP), **caractérisé en ce que** le microprocesseur comprend un générateur de sélection de puce (EBI) ayant une première sortie de sélection de puce (CS0) et une deuxième sortie de sélection de puce (CS1), moyennant quoi la première sortie de sélection de puce (CS0) est connectée à la première entrée de signal (CS) et la deuxième sortie de sélection de puce (CS1) est connectée à la deuxième entrée de signal (A19), et **en ce que** les sorties de sélection de puce (CS0, CS1) et les entrées de signal (CS, A19) sont connectées les unes aux autres sans élément critique en terme de temps entre elles.

2. Agencement pour adresser une mémoire selon la revendication 1, par lequel le générateur de sélection de puce (EBI) est intégré dans le microprocesseur (MP).

3. Agencement pour adresser une mémoire selon la revendication 1 ou 2, par lequel le générateur de sélection de puce (EBI) est configurable.

4. Agencement pour adresser une mémoire selon l'une quelconque des revendications 1 à 3, par lequel la deuxième sortie de sélection de puce (CS1) est agencée pour adresser l'un ou l'autre des deux plans de mémoire (FP0 ; FP1), en fonction du plan parmi les deux plans de mémoire (FP0 ; FP1) qui est défini en tant que plan actif.

5. Agencement pour adresser une mémoire selon l'une quelconque des revendications 1 à 4, par lequel la deuxième sortie de sélection de puce (CS1) est active « au niveau bas » lorsqu'un premier plan (FP0) parmi les deux plans de mémoire est défini en tant que plan actif, et par lequel la deuxième sortie de sélection de puce (CS1) est active « au niveau haut » lorsqu'un deuxième plan (FP1) parmi les deux plans de mémoire est défini en tant que plan actif.

6. Agencement pour adresser une mémoire selon l'une quelconque des revendications 1 à 5, par lequel la deuxième sortie de sélection de puce (CS1) est programmée pour réagir dans une plage d'adresses spécifiée (80.0000 à BF.FFFF ; C0.0000 à FF.FFFF).

7. Agencement pour adresser une mémoire selon l'une quelconque des revendications 1 à 6, par lequel la première sortie de sélection de puce (CS0) est active « au niveau bas » lorsque la mémoire fait l'objet d'un accès.
